# EUROPÄISCHE PATENTANMELDUNG

(11) **EP 4 498 303 A1**
(43) Veröffentlichungstag der Anmeldung: **29.01.2025**
(21) Anmeldenummer: 23187440.5
(22) Anmeldetag: 25.07.2023
(51) Int. Cl.: G06Q 10/0631, G06Q 50/04

(54) **VERFAHREN ZUM ERZEUGEN EINES BEREITSTELLUNGSPLANS FÜR ZUMINDEST EIN WERKZEUG FÜR ZUMINDEST EINE PRODUKTIONSMASCHINE, COMPUTERPROGRAMMPRODUKT, COMPUTERLESBARES SPEICHERMEDIUM SOWIE ELEKTRONISCHE RECHENEINRICHTUNG**

(71) Anmelder: Siemens Aktiengesellschaft, 80333 München (DE)
(72) Erfinder: Die Erfindernennung liegt noch nicht vor
(74) Vertreter: Siemens Patent Attorneys

(57) **Zusammenfassung**

Die Erfindung betrifft ein Verfahren zum Erzeugen eines Bereitstellungsplans (30) für zumindest ein Werkzeug (18), mit den Schritten:
- Empfangen eines Produktionsplans (32) mittels der elektronischen Recheneinrichtung (28); (S1)
- Bestimmen des zumindest einen benötigten Werkzeugs (18) in Abhängigkeit von dem Produktionsplan (32); (S2)
- Bestimmen einer ersten Position (P1) eines Werkzeuglagers (16) für das Werkzeug (18) relative zu einer zweiten Position (P2) der Produktionsmaschine (12, 14); (S3)
- Bestimmen einer Bereitstellungszeit (34) für das Werkzeug (18) in Abhängigkeit von den relativen Positionen (P1, P2); (S4) und
- Erzeugen des Bereitstellungsplans (30) für das zumindest eine Werkzeug (18) in Abhängigkeit von der bestimmten Bereitstellungszeit (34). (S5)

Ferner betrifft die Erfindung ein Computerprogrammprodukt, ein computerlesbares Speichermedium sowie eine elektronische Recheneinrichtung (10).

## Beschreibung

Die Erfindung betrifft ein Verfahren zum Erzeugen eines Bereitstellungsplans für zumindest ein Werkzeug für zumindest eine Produktionsmaschine mittels einer elektronischen Recheneinrichtung gemäß dem geltenden Patentanspruch 1. Ferner betrifft die Erfindung ein Computerprogrammprodukt, ein computerlesbares Speichermedium sowie eine elektronische Recheneinrichtung.

Aus dem Stand der Technik sind bereits Werkzeug- und Programmverwaltungen für Erzeugungsplattformen bekannt. Heutige Produktionsplanungssysteme (z. B. MES- Manufacturing Execution System) gehen davon aus, dass Produktionsmaschinen gut geplante Aufträge zur Herstellung von Werkstücken benötigen. Es wird angenommen, dass die Vorbereitung der Werkzeuge und deren Beladung der Produktionsmaschinen eine vordefinierte, insbesondere zum Beispiel konstante, Vorbereitungszeit erfordern. Tatsächlich ist die Vorbereitungszeit keineswegs konstant, so dass eine vordefinierte Zeit nicht wirklich sinnvoll ist, das heißt, eine überschätzte Obergrenze ist erforderlich, damit Konflikte vermieden werden können. Andererseits bedeutet dies, dass die Werkzeuge in vielen Fällen vorzeitig vorbereitet werden, so dass ein größerer Lagerbestand erforderlich ist. Mit anderen Worten, es gibt Ineffizienzen, was bedeutet, dass beispielsweise mehr Inventar benötigt wird, wie beispielsweise Werkzeug, Werkzeugkomponenten oder Lagerplätze.

Eine weitere Ursache für Ineffizienzen liegt darin, dass die Standzeit von Werkstücken sehr oft als Konstante definiert wird, ohne die Produktionsparameter wie Vorschub, Schnitttiefe, Spindeldrehzahl, Werkzeug- und Werkstückmaterial zu berücksichtigen. Folglich ist die Standzeit falsch, so dass entweder neue Werkzeuge zu früh vorbereitet werden oder das alte Werkzeug zu früh eingesetzt beziehungsweise ersetzt wird, oder alte Werkzeuge überverschleißt werden, so dass die Produktqualität leidet beziehungsweise ein Stillstand verursacht wird.

Ferner erfolgt die Vorbereitung der Werkzeuge in der Regel manuell durch so genannte Voreinsteller.

Der Transport der Werkzeuge vom Voreinstellbereich zu den Maschinen wird manchmal vom Voreinsteller, insbesondere als so genannte letzte Abfrage, oder vom Maschinenbediener, welcher insbesondere die Kommissionierung der Werkzeuge für einen anstehenden Auftrag durchführt, durchgeführt, aber es ist ebenfalls üblich, dass ein Auftrag erteilt werden muss, so dass beispielsweise ein Logistiker Werkzeuge mit beispielsweise einem Wagen transportiert.

Aufgabe der vorliegenden Erfindung ist es, ein Verfahren, ein Computerprogrammprodukt, ein computerlesbares Speichermedium sowie eine elektronische Recheneinrichtung zu schaffen, mittels welchen ein effizienter Bereitstellungsplan für ein Werkzeug für eine Produktionsmaschine erzeugt werden kann.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Erzeugen eines Bereitstellungsplans für zumindest ein Werkzeug für zumindest eine Produktionsmaschine mittels einer elektronischen Recheneinrichtung. Es wird ein Produktionsplan für die zumindest eine Produktionsmaschine mittels der elektronischen Recheneinrichtung empfangen. Es wird zumindest ein benötigtes Werkzeug für die Produktionsmaschine in Abhängigkeit von dem Produktionsplan mittels der elektronischen Recheneinrichtung bestimmt. Es erfolgt das Bestimmen einer ersten Position eines Werkzeuglagers für das Werkzeug relative zu einer zweiten Position der Produktionsmaschine mittels der elektronischen Recheneinrichtung. Es wird eine Bereitstellungszeit für das Werkzeug in Abhängigkeit von den relativen Positionen mittels der elektronischen Recheneinrichtung bestimmt. Es erfolgt das Erzeugen eines Bereitstellungsplans für das zumindest eine Werkzeug in Abhängigkeit von der bestimmten Bereitstellungszeit mittels der elektronischen Recheneinrichtung.

Somit kann, insbesondere in Abhängigkeit der Bereitstellungszeit, ein Bereitstellungsplan bestimmt werden, welcher es ermöglicht, effizient beispielsweise Werkzeuge für die Produktionsmaschine bereitzustellen. Insbesondere kann der Bereitstellungsplan somit berücksichtigen, wie viel Zeit von dem Werkzeuglager zur Produktionsmaschine benötigt wird, um das Werkzeug an die Produktionsmaschine zu übergeben.

Insbesondere löst somit die Erfindung das Problem, dass Produktionsplanungsinformationen, wie ein Auftrag, insbesondere ein Produktionsplan, welcher insbesondere eine Zielmaschine, eine Losgröße, ein Zeitintervall der Fertigung sowie weitere Informationen enthalten kann, die benötigte Werkzeugliste sowie geplante Produktionsparameter, wie beispielsweise Vorschub, Schnitttiefe, Spindeldrehzahl, Werkzeugmaterial, Werkstückmaterial, enthalten. Anhand dieser Informationen kann die benötigte Anzahl an Werkzeuginstanzen sowie der Zeitpunkt, zu dem diese benötigt werden, ermittelt werden. Insbesondere kann die Anzahl der Werkzeuginstanzen sowie der Zeitpunkt als Bereitstellungsplan angesehen werden.

Insbesondere offenbart somit die Erfindung, wie dies auf effiziente Weise erreicht werden kann, so dass die Mängel der bekannten Ansätze im Stand der Technik verbessert und die Nachhaltigkeit erhöht werden kann. Insbesondere wird der gesamte Prozess dabei automatisiert, so dass nicht nur die Vorbereitung geplant und automatisch durchgeführt werden kann, sondern auch der Transport beispielsweise automatisch, zum Beispiel mit Hilfe von so genannten AGV (Automatic Guided Vehicle - automatisch geführtes Fahrzeug) durchgeführt wird. Das Ergebnis ist, dass die Werkzeuge automatisch und nahezu Just-in-Time (in Echtzeit) für jeden Produktionsauftrag geliefert werden können.

Insbesondere können somit geplante Produktionsaufträge zum Beispiel über ein MES (Manufactoring Execution System) erteilt werden. Unter Berücksichtigung von beispielsweise Robotern, fahrerlosen Transportsystemen, und unter allen verfügbaren digitalen Planungsinformationen sowie der Nutzung von Kameraaufzeichnungen der Arbeitsabläufe lässt sich ein vollautomatischer Werkzeugbereitstellungsprozess und somit der Bereitstellungsplan erstellen. Auf diese Weise können die Produktionskosten gesenkt werden, da keine Personalkosten pro Zeiteinheit mehr anfallen. Ferner kann die Produktionszeit sowie der Materialaufwand entsprechend reduziert werden.

Genaue Zeitabschätzungen werden durch die Verwendung modellbasierter Ansätze für die Lebensdauerabschätzung herangezogen und verursachen somit weniger Über- und Unterschätzungen als im Stand der Technik. Auch modellgestützte Ansätze können zur Bestimmung der Transportzeit herangezogen werden. Die Verwendung realistischer Zeiten ermöglicht eine effizientere Werkzeugbereitstellung, so dass weniger Leerlaufzeiten, beispielsweise von den AGVs, Voreinstellgeräte, Werkzeugbereitstellung, Arbeiter/Roboter, Produktionsmaschinen, realisiert werden und der Bestand mit geringen Puffern niedrig gehalten werden kann, so dass die Gesamtproduktionskosten pro Stück sowie die Gesamtproduktionszeit niedrig gehalten beziehungsweise reduziert werden kann.

Die Visualisierung der Planungsergebnisse bietet volle Transparenz über zum Beispiel Vorbereitungszeiten von Aufträgen oder Werkzeugtypen, Nutzungszeiten von Voreinstellgeräten, Robotern, Wagen/AGVs, Leerlaufzeiten auf jedem dieser Geräte.

Diese Transparenz kann zu einer weiteren Optimierung der Produktion führen.

Ferner kann die automatische Nachbestellung von Komponenten oder kompletten Werkzeugen ermöglicht werden, wodurch weitere Kosten sowie Ausfälle verhindert werden können.

Gemäß einer vorteilhaften Ausgestaltungsform wird bei der Bereitstellungszeit eine Verladezeit von dem Werkzeug auf eine Transporteinrichtung im Werkzeuglager berücksichtigt. Bei der Transporteinrichtung kann es sich beispielsweise um ein fahrerloses Transportsystem (FCS) beziehungsweise um ein AGV handeln. Insbesondere kann beispielsweise das Werkzeuglager das Werkzeug aufweisen. Es wird eine Zeit benötigt, um beispielsweise das Werkzeug von dem Werkzeuglager auf die Transporteinrichtung zu verladen. Das Verladen kann dabei manuell, beispielsweise durch eine Person (Voreinsteller), durchgeführt werden, sowie auch roboterbasiert. Diese Verladezeit kann nun bei der Bereitstellungszeit berücksichtigt werden, wodurch zuverlässig ein Bereitstellungsplan ermittelt werden kann.

Es hat sich weiterhin als vorteilhaft erwiesen, wenn bei der Bereitstellungszeit eine Entladezeit von dem Werkzeug von einer Transporteinrichtung in die Produktionsmaschine berücksichtigt wird. Insbesondere kann somit auch das Entladen von dem Werkzeug von der Transporteinrichtung zu der Produktionsmaschine berücksichtigt werden. Auch das Entladen kann dabei manuell von einer Person, oder auch durch einen Roboter durchgeführt werden. Somit kann zuverlässig die Bereitstellungszeit beziehungsweise der Bereitstellungsplan erzeugt werden.

Eine weitere vorteilhafte Ausgestaltungsform sieht vor, dass bei der Bereitstellungszeit eine Transportzeit von einer Transporteinrichtung zwischen dem Werkzeuglager und der Produktionsmaschine berücksichtigt wird. Beispielsweise können hierzu entsprechende Pläne eines Werks vorgesehen sein, welche die Position des Werkzeuglagers und der Produktionsmaschine kennen. Die Transportzeit kann dann beispielsweise auf Basis von entsprechenden Geschwindigkeitswerten der Transporteinrichtung bestimmt werden. Somit kann zuverlässig und detailliert die Bereitstellungszeit bestimmt werden.

Ebenfalls vorteilhaft ist, wenn eine Beschleunigung der Transporteinrichtung und/oder eine Transportgeschwindigkeit der Transporteinrichtung beim Bestimmen der Transportzeit berücksichtigt werden. Insbesondere können unterschiedliche Transporteinrichtung bereitgestellt werden. Entsprechende Informationen zu der Transporteinrichtung können dazu genutzt werden, um zuverlässig die Bereitstellungszeit zu bestimmen. Insbesondere können dabei Beschleunigungswerte sowie Bremswerte, eine durchschnittliche Transportgeschwindigkeit sowie eine maximale Transportgeschwindigkeit berücksichtigt werden. Dadurch ist es ermöglicht, dass zuverlässig die Bereitstellungszeit ermittelt werden kann.

Ebenfalls vorteilhaft ist, wenn eine Route für die Transporteinrichtung von dem Werkzeuglager zu der Produktionsmaschine bestimmt wird und die Transportzeit in Abhängigkeit von der bestimmten Route bestimmt wird. Beispielsweise können innerhalb des Werks entsprechende Hindernisse aufzufinden sein, welche ein direktes Anfahren der Transporteinrichtung zwischen dem Werkzeuglager und der Produktionsmaschine verhindern. Ferner können beispielsweise auch vorgegebene Routen bereitgestellt werden, welche beispielsweise Rampen aufweisen, um entsprechende Höhen auszugleichen. Dies kann wiederum als Information der elektronischen Recheneinrichtung zugeführt werden. Auf Basis dieser Informationen wiederum kann zuverlässig eine Route bestimmt werden, beispielsweise eine kürzeste beziehungsweise schnellste Route, welche dann wiederum beim Erstellen des Bereitstellungsplans berücksichtigt werden kann. Somit kann sehr detailliert der Bereitstellungsplan ermittelt werden.

Es hat sich weiterhin als vorteilhaft erwiesen, wenn die Transporteinrichtung als automatisierte Transporteinrichtung bereitgestellt wird. Insbesondere kann beispielsweise auch das Verladen des Werkzeugs auf die Transporteinrichtung sowie das Entladen des Werkzeugs von der Transporteinrichtung automatisiert durchgeführt werden. Hierzu kann beispielsweise vorgesehen sein, dass die Transporteinrichtung entsprechende Robotereinrichtungen zum Verladen und Entladen aufweist. Alternativ können beispielsweise das Werkzeuglager und die Produktionsmaschine entsprechende Roboter aufweisen, um ein Verladen beziehungsweise Entladen durchzuführen. Somit kann ein hochautomatisierter Prozess bereitgestellt werden, welcher insbesondere zeit- und ressourcensparend die Produktion eines Produkts erlaubt.

In einer weiteren vorteilhaften Ausgestaltungsform ist vorgesehen, dass beim Produktionsplan produktionsmaschinenspezifische Parameter und/oder produktspezifische Parameter und/oder ein werkzeugspezifischer Parameter eines herzustellenden Produkts berücksichtigt werden. Beispielsweise kann eine Losgrö-ße als produktspezifischer Parameter angesehen werden. Als produktionsmaschinenspezifischer Parameter kann beispielsweise eine Spindeldrehzahl angesehen werden. Ferner kann als werkzeugspezifischer Parameter beispielsweise ein Verschleiß beziehungsweise eine Einsatzzeit des Werkzeugs berücksichtigt werden. Somit können unterschiedliche Parameter berücksichtigt werden, welche es erlauben, einen detaillierten Bereitstellungsplan zu erzeugen.

In einer weiteren vorteilhaften Ausgestaltungsform ist vorgesehen, dass in Abhängigkeit von dem Produktionsplan eine Vielzahl von benötigen Werkzeugen bestimmt wird und eine jeweilige Verladezeit, Entladezeit und Bestückungszeit an einer Produktionsmaschine berücksichtigt werden. Insbesondere kann somit vorgesehen sein, dass beispielsweise mittels der Transporteinrichtung eine Vielzahl von Werkzeugen aus dem Werkzeuglager an die Produktionsmaschine verladen wird. Jedes Werkzeug benötigt dabei eine entsprechende Verladezeit und Entladezeit. Auf Basis der bestimmten Werkzeuge kann nun zuverlässig die Verladezeit und Entladezeit eines jeweiligen Werkzeugs ermittelt werden und mit bei dem Bereitstellungsplan berücksichtigt werden. Somit kann zuverlässig der Bereitstellungsplan erzeugt werden.

Eine weitere vorteilhafte Ausgestaltungsform sieht vor, dass zur Bestimmung der Bereitstellungszeit historische Bereitstellungszeiten berücksichtigt werden. Insbesondere kann somit die Bereitstellungszeit auf Basis von in der Vergangenheit erzeugter Produkte beziehungsweise Verladezeiten und Entladezeiten bestimmt werden. Hierzu könne beispielsweise entsprechende Aufzeichnungen genutzt werden, um die historischen Daten auszuwerten. Dadurch ist es ermöglicht, dass zuverlässig die Bereitstellungszeit ermittelt werden kann.

Eine weitere vorteilhafte Ausgestaltungsform sieht vor, dass bei einer Nichteinhaltung des Bereitstellungsplans eine Warnnachricht erzeugt wird. Beispielsweise kann eine Rückmeldung an die elektronische Recheneinrichtung abgegeben werden. Die Annahme der elektronischen Recheneinrichtung, dass beispielsweise genügend Vorbereitungszeit für den geplanten Auftrag vorhanden ist, kann falsch sein. Die Terminierungsergebnisse können daher eine Rückmeldung geben, wenn die Terminierung nicht rechtzeitig möglich ist. Die Rückmeldung könnte lauten, dass beispielsweise mehr Zeit benötigt wird, wie viel mehr Zeit benötigt wird, sowie eventuell eine reduzierte Losgröße, eine Wartezeit auf nachbestellte Komponenten, mehr Inventar oder auch mehr Inventar, um die Engpässe zu beseitigen.

Ebenfalls vorteilhaft ist, wenn mittels einer künstlichen Intelligenz, insbesondere mittels eines neuronalen Netzwerks, der Bereitstellungsplan erzeugt wird. Beispielsweise kann auf Basis von historischen Daten das neuronale Netzwerk den entsprechenden Bereitstellungsplan ermitteln. Somit kann hochpräzise der Bereitstellungsplan erzeugt werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ferner betrifft die Erfindung daher auch ein computerlesbares Speichermedium mit dem Computerprogrammprodukt nach dem vorhergehenden Aspekt.

Ein nochmals weiterer Aspekt der Erfindung betrifft eine elektronische Recheneinrichtung zum Erzeugen eines Bereitstellungsplans für zumindest ein Werkzeug für zumindest eine Produktionsmaschine, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Vorteilhafte Ausgestaltungsformen des Verfahrens sind als vorteilhafte Ausgestaltungsformen des Computerprogrammprodukts, des computerlesbaren Speichermediums sowie der elektronischen Recheneinrichtung anzusehen. Die elektronische Recheneinrichtung weist hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebenen Kategorie für eine Klassifizierungsaufgabe, einen oder mehrere prädizierte Werte oder eine prädizierte Sequenz beinhalten kann.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Dabei zeigen:
- FIG 1: eine schematische Draufsicht auf ein Werk mit einer Ausführungsform einer Produktionsmaschine, einem Werkzeuglager, eine Transporteinrichtung sowie einer erfindungsgemäßen elektronischen Recheneinrichtung; und
- FIG 2: ein schematisches Ablaufdiagramm gemäß einer Ausführungsform des Verfahrens.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

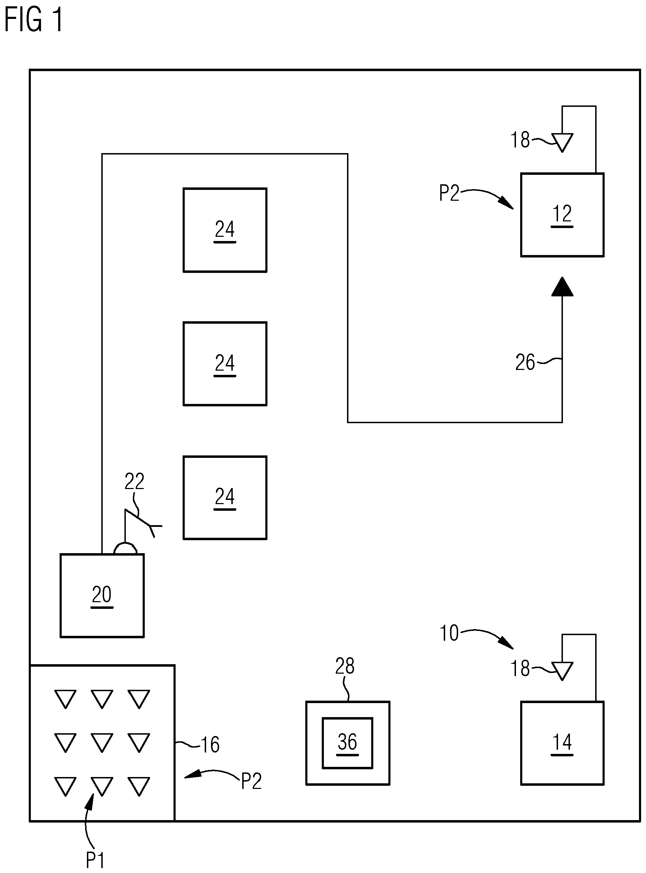

FIG 1 zeigt eine schematische Draufsicht auf ein Werk 10. Im Werk 10 ist eine erste Produktionsmaschine 12 sowie eine zweite Produktionsmaschine 14 gezeigt. Im vorliegenden Ausführungsbeispiel wird insbesondere ein Produkt mit der ersten Produktionsmaschine 12 hergestellt. Das Werk 10 weist ferner ein Werkzeuglager 16 auf, in dem eine Vielzahl von Werkzeugen 18 bereitgestellt wird. Ferner ist eine Transporteinrichtung 20 gezeigt, welche insbesondere als automatisierte Transporteinrichtung 20 ausgebildet ist. Im vorliegenden Ausführungsbeispiel weist die Transporteinrichtung 20 einen Roboter 22, insbesondere einen Roboterarm, auf. Des Weiteren sind Hindernisse 24 gezeigt, welche die Transporteinrichtung 20 beispielsweise zur ersten Produktionsmaschine 12 umfahren muss. Hierbei kann beispielsweise eine Route 26 für die Transporteinrichtung 20 entsprechend bestimmt werden.

Ferner ist insbesondere eine erfindungsgemäße elektronische Recheneinrichtung 28 gezeigt.

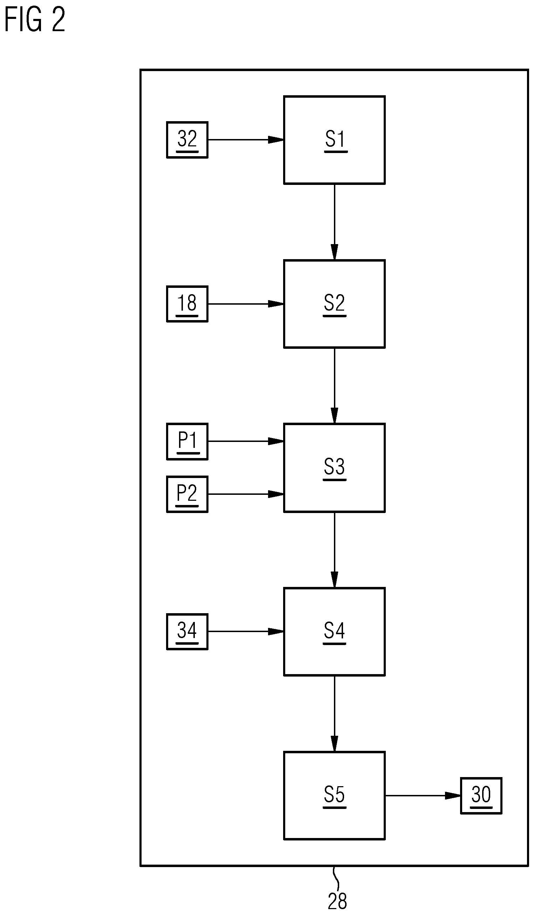

FIG 2 zeigt ein schematisches Ablaufdiagramm gemäß einer Ausführungsform des Verfahrens, insbesondere durchgeführt mittels der elektronischen Recheneinrichtung 28. Insbesondere zeigt die FIG 1 ein Verfahren zum Erzeugen eines Bereitstellungsplans 30 für zumindest das Werkzeug 18 für zumindest eine Produktionsmaschine 12, 14 mittels der elektronischen Recheneinrichtung 28. Es wird in einem ersten Schritt S1 ein Produktionsplan 32 für die zumindest eine Produktionsmaschine 12, 14 mittels der elektronischen Recheneinrichtung 28 empfangen. Es erfolgt das Bestimmen des zumindest einen benötigten Werkzeugs 18 für die Produktionsmaschine 12, 14 in Abhängigkeit von dem Produktionsplan 32 mittels der elektronischen Recheneinrichtung 28 in einem zweiten Schritt S2. In einem dritten Schritt S3 wird zumindest eine Position P1, P2 der Produktionsmaschine 12 relativ zu dem Werkzeuglager 16, insbesondere einer ersten Position P1 des Werkzeuglagers 16 und einer zweiten Position P2 der ersten Produktionsmaschine 12, für das zumindest eine Werkzeug 18 mittels der elektronischen Recheneinrichtung 28 bestimmt. Im vierten Schritt S4 wird eine Bereitstellungszeit 34 für das Werkzeug 18 in Abhängigkeit von den relativen Positionen P1, P2 mittels der elektronischen Recheneinrichtung 28 bestimmt. Im fünften Schritt S5 erfolgt das Erzeugen des Bereitstellungsplans 30 für das zumindest eine Werkzeug 18 in Abhängigkeit von der bestimmten Bereitstellungszeit 34 mittels der elektronischen Recheneinrichtung 28.

Insbesondere kann dabei vorgesehen sein, dass bei der Bereitstellungszeit 34 eine Verladezeit von dem Werkzeug 18 auf einen Transporteinrichtung 20 im Werkzeuglager 16 berücksichtigt wird. Ferner kann bei der Bereitstellungszeit 34 eine Entladezeit von dem Werkzeug 18 von der Transporteinrichtung 20 in die Produktionsmaschine 12, 14 berücksichtigt werden. Ferner kann vorgesehen sein, dass bei der Bereitstellungszeit 34 eine Transportzeit von der Transporteinrichtung 20 zwischen dem Werkzeuglager 16 und der Produktionsmaschine 12, 14 berücksichtigt wird. Ebenfalls kann vorgesehen sein, dass eine Beschleunigung der Transporteinrichtung 20 und/oder eine Transportgeschwindigkeit der Transporteinrichtung 20 bei dem Bestimmen der Transportzeit berücksichtigt werden. Ebenfalls kann die Route 26 für die Transporteinrichtung 20 von dem Werkzeuglager 16 zu der Produktionsmaschine 12, 14 bestimmt werden und die Transportzeit in Abhängigkeit von der bestimmten Route 26 bestimmt werden.

Ferner kann vorgesehen sein, dass beim Produktionsplan 32 produktionsspezifische Parameter und/oder produktspezifische Parameter eines herzustellenden Produkts und/oder ein werkzeugspezifischer Parameter berücksichtigt werden. Ferner kann in Abhängigkeit von dem Produktionsplan 32 eine Vielzahl von benötigen Werkzeugen 18 bestimmt werden und eine jeweilige Verladezeit, Entladezeit und Bestückungszeit an der Produktionsmaschine 12, 14 berücksichtigt werden.

Ebenfalls kann vorgesehen sein, dass zum Bestimmen der Bereitstellungszeit 34 historische Bereitstellungszeiten 34 berücksichtigt werden.

Des Weiteren kann bei einer Nichteinhaltung des Bereitstellungsplans 30 eine Warnnachricht erzeugt werden.

Des Weiteren kann mittels einer künstlichen Intelligenz, insbesondere mittels eines neuronalen Netzwerks 36, der Bereitstellungsplan 30 erzeugt werden.

Insbesondere zeigen somit die Figuren, dass auf alle verfügbaren Planungsinformationen als Eingangsgrößen zurückgegriffen werden kann. Entsprechende Produktionspläne 32, beispielsweise als MES-Aufträge, incl. Zielmaschine, Losgröße, Zeitintervalle für die Fertigung, sowie die benötigte Werkzeugliste incl. der Werkzeug-Einsatzzeiten, sowie die geplanten Fertigungsparameter, wie beispielsweise Vorschub, Schnitttiefe, Spindeldrehzahl, Werkzeugmaterial, Werkstückmaterial oder dergleichen können berücksichtigt werden. Ferner können auch historische Daten zu Werkzeugvorbereitungszeiten sowie Transportzeiten genutzt werden. Auch eine Werkstattkarte wird berücksichtigt.

Sollten beispielsweise nicht alle Informationen verfügbar sein, so kann ebenfalls das Verfahren durchgeführt werden, jedoch kann dies beispielsweise weniger optimal sein.

Die Produktionsparameter ermöglichen eine realistische Vorhersage der Standzeiten mit Hilfe eines Standzeitmodells, beispielsweise einer Tabelle, lineare Gleichungsformeln oder das neuronale Netz 36. In Kombination mit der Werkzeugliste und den Werkzeug-Einsatzzeiten werden die benötigten Werkzeuge 18 pro Auftrag/Zeitintervall mathematisch bestimmt.

Die historischen Daten über die erforderlichen Vorbereitungszeiten werden statistisch ausgewertet, um Informationen über die minimalen, maximalen und durchschnittlichen Vorbereitungszeiten für jeden Werkzeugtyp oder jede Werkzeugklasse zu erhalten. Damit lässt sich die gewünschte Strategie abbilden. Beispielsweise kann als Strategie ein kleinster Bestand, höchste Maschinenproduktionszeit, optimale Kombination aus Produktionsrate und Bestandskosten gewählt werden.

Mit Hilfe von Werkstattplänen und der Analyse historischer Daten können die Transportzeiten der vorbereiteten Werkzeuge 18 vom Voreinstellbereich, insbesondere dem Werkzeuglager 16, oder den Schränken zu den Zielmaschinen berücksichtigt werden. Wie die Vorbereitungszeit können auch die Transportzeiten anhand historischer Daten statistisch ermittelt werden. Alternativ kann die Karte mit den entsprechenden Parametern für die Transporteinrichtung 20, beispielsweise Beschleunigung und/oder Geschwindigkeit, verwendet werden, um die Transportzeiten mit Hilfe eines kinematischen/mechanischen Modells zu bestimmen.

Insbesondere wird ein Terminplanungsergebnis, insbesondere der Bereitstellungsplan 30, bereitgestellt. Dieser bildet die Voreinstellung ab, das heißt, wann müssen die Werkzeugkomponenten kommissioniert und vom Lager zur Voreinstellung transportiert werden, und wann diese Werkzeuge 18 montiert und vermessen werden müssen, sowie welcher Voreinsteller beziehungsweise Voreinstellgerät sowie Arbeitsplatz reserviert werden muss. Ferner wird der Transport angegeben, das heißt insbesondere wann der Transport mit welchem Transportmittel beziehungsweise Transporteinrichtung 20 stattfinden soll. Auch kann eine Maschinenvorbereitung mitbestimmt werden, das heißt, wann werden die Werkzeuge 18 von welchem Bediener in die Produktionsmaschine 12, 14 geladen und entsprechende alte Werkzeuge 18 entladen. Diese Daten werden genutzt, so dass das MES die Produktionsaufträge entsprechend erfüllen kann. Die Ergebnisse lassen sich durch geeignete Diagramme, zum Beispiel Balkendiagramme, Schichtkalender, die jeweiligen Ressourcen und Aufträge darstellen.

Es kann eine Rückmeldung an das MES-System, insbesondere als Warnmeldung der elektronischen Recheneinrichtung 28, erzeugt werden, wenn beispielsweise herausgefunden wird, dass nicht genügend Vorbereitungszeit für einen geplanten Auftrag vorhanden ist. Die Terminierungsergebnisse können dann eine Rückmeldung geben, wenn die Terminierung nicht rechtzeitig möglich ist. Die Rückmeldung kann beispielsweise lauten, dass mehr Zeit benötigt wird, wie viel mehr Zeit benötigt wird, eine eventuell reduzierte Losgröße, Wartezeit auf nachbestellte Komponenten sowie mehr Inventar, um Engpässe zu beseitigen.

Die Werkzeugvoreinstellung kann manuell erfolgen, aber es ist insbesondere vorgesehen, dass beispielsweise Roboter 22 zur Entnahme von Komponenten und zur Montage der kompletten Werkzeuge 18 eingesetzt werden. Die Roboter 22 können vorhandene Montageinformationen wie Explosionszeichnungen, Montageablaufpläne und so weiter als Eingabe verwenden. Es können ferner auch Kameras eingesetzt werden, um die Arbeitsabläufe der menschlichen Voreinsteller aufzuzeichnen und dann ein Deep-Learning anzuwenden, um die Roboter 22 zu trainieren, und um Komponenten und komplette Werkzeuge 18 in Wagen oder Transporteinrichtungen 20 zu platzieren. Vollständige Werkzeuge 18 werden schließlich auch von den Robotern 22 in die Maschinen geladen.

In einer erfindungsgemäßen Erweiterung können beispielsweise auch über ein Bestellsystem automatisch diejenigen Komponenten nachbestellt werden, die einen niedrigen Lagerbestand haben und für einen Auftrag benötigt werden oder wenn der Lagerbestand einen Schwellenwert überschreitet.

## Patentansprüche

1. Verfahren zum Erzeugen eines Bereitstellungsplans (30) für zumindest ein Werkzeug (18) für zumindest eine Produktionsmaschine (12, 14) mittels einer elektronischen Recheneinrichtung (28), mit den Schritten:
- Empfangen eines Produktionsplans (32) für die zumindest eine Produktionsmaschine (12, 14) mittels der elektronischen Recheneinrichtung (28); (S1)
- Bestimmen des zumindest einen benötigten Werkzeugs (18) für die Produktionsmaschine (12, 14) in Abhängigkeit von dem Produktionsplan (32) mittels der elektronischen Recheneinrichtung (28); (S2)
- Bestimmen einer ersten Position (P1) eines Werkzeuglagers (16) für das Werkzeug (18) relative zu einer zweiten Position (P2) der Produktionsmaschine (12, 14) mittels der elektronischen Recheneinrichtung (28); (S3)
- Bestimmen einer Bereitstellungszeit (34) für das Werkzeug (18) in Abhängigkeit von den relativen Positionen (P1, P2) mittels der elektronischen Recheneinrichtung (28); (S4) und
- Erzeugen des Bereitstellungsplans (30) für das zumindest eine Werkzeug (18) in Abhängigkeit von der bestimmten Bereitstellungszeit (34) mittels der elektronischen Recheneinrichtung (28); (S5) .

2. Verfahren nach Anspruch 1, **dadurch gekennzeichnet, dass** bei der Bereitstellungszeit (34) eine Verladezeit von dem Werkzeug (18) auf eine Transporteinrichtung (20) im Werkzeuglager (16) berücksichtigt wird.

3. Verfahren nach Anspruch 1 oder 2, **dadurch gekennzeichnet, dass**
bei der Bereitstellungszeit (34) eine Entladezeit von dem Werkzeug (18) von einer Transporteinrichtung (20) in die Produktionsmaschine (12, 14) berücksichtigt wird.

4. Verfahren nach einem der vorhergehenden Ansprüche, **dadurch gekennzeichnet, dass**
bei der Bereitstellungszeit (34) eine Transportzeit von einer Transporteinrichtung (20) zwischen dem Werkzeuglager (16) und der Produktionsmaschine (12, 14) berücksichtigt wird.

5. Verfahren nach Anspruch 4, **dadurch gekennzeichnet, dass** eine Beschleunigung der Transporteinrichtung (20) und/oder eine Transportgeschwindigkeit der Transporteinrichtung (20) beim Bestimmen der Transportzeit berücksichtigt werden.

6. Verfahren nach Anspruch 4 oder 5, **dadurch gekennzeichnet, dass**
eine Route (26) für die Transporteinrichtung (20) von dem Werkzeuglager (16) zu der Produktionsmaschine (12, 14) bestimmt wird und die Transportzeit in Abhängigkeit von der bestimmten Route (20) bestimmt wird.

7. Verfahren nach einem der Ansprüche 4 bis 6, **dadurch gekennzeichnet, dass**
die Transporteinrichtung (20) als automatisierte Transporteinrichtung (20) bereitgestellt wird.

8. Verfahren nach einem der vorhergehenden Ansprüche, **dadurch gekennzeichnet, dass**
beim Produktionsplan (32) produktionsmaschinenspezifische Parameter und/oder produktspezifische Parameter eines herzustellenden Produkts und/oder ein werkzeugspezifischer Parameter berücksichtigt werden.

9. Verfahren nach einem der vorhergehenden Ansprüche, **dadurch gekennzeichnet, dass**
in Abhängigkeit von dem Produktionsplan (32) eine Vielzahl von benötigten Werkzeugen (18) bestimmt wird und eine jeweilige Verladezeit, Entladezeit und Bestückungszeit an der Produktionsmaschine (12, 14) berücksichtigt werden.

10. Verfahren nach einem der vorhergehenden Ansprüche, **dadurch gekennzeichnet, dass**
zur Bestimmung der Bereitstellungszeit (34) historische Bereitstellungszeiten (34) berücksichtigt werden.

11. Verfahren nach einem der vorhergehenden Ansprüche, **dadurch gekennzeichnet, dass**
bei einer Nichteinhaltung des Bereitstellungsplans (30) eine Warnnachricht erzeugt wird.

12. Verfahren nach einem der vorhergehenden Ansprüche, **dadurch gekennzeichnet, dass**
mittels einer künstlichen Intelligenz, insbesondere mittels eines neuronalen Netzwerks (36), der Bereitstellungsplan (30) erzeugt wird.

13. Computerprogrammprodukt mit Programmcodemitteln, welche eine elektronische Recheneinrichtung (28) dazu veranlassen, wenn die Programmcodemittel von der elektronischen Recheneinrichtung (28) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Elektronische Recheneinrichtung (28) zum Erzeugen eines Bereitstellungsplans (30) für zumindest ein Werkzeug (18) für zumindest eine Produktionsmaschine (12, 14), wobei die elektronische Recheneinrichtung (28) zum Durchführen eines Verfahrens nach einem der Ansprüche 1 bis 12 ausgebildet ist.
